(19) Europäisches Patentamt
European Patent Office
Office européen des brevets

(11) **EP 4 235 319 A1**

(12) **EUROPÄISCHE PATENTANMELDUNG**

(43) Veröffentlichungstag:
**30.08.2023   Patentblatt 2023/35**

(21) Anmeldenummer: **23157594.5**

(22) Anmeldetag: **20.02.2023**

(51) Internationale Patentklassifikation (IPC):
**G05B 13/04** (2006.01)   **G05B 13/02** (2006.01)
**G06N 20/00** (2019.01)   **G05B 1/02** (2006.01)

(52) Gemeinsame Patentklassifikation (CPC):
**G05B 1/02; G05B 13/0265; G05B 13/04; G06N 20/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **25.02.2022   DE 102022104648**

(71) Anmelder: **Rheinisch-Westfälische Technische Hochschule (RWTH) Aachen**
**52062 Aachen (DE)**

(72) Erfinder:
• **Koch, Lucas**
  **52062 Aachen (DE)**
• **Picerno, Mario**
  **52062 Aachen (DE)**
• **Badalian, Kevin**
  **52064 Aachen (DE)**
• **Lee, Sung-Yong**
  **52068 Aachen (DE)**
• **Andert, Jakob Lukas**
  **52066 Aachen (DE)**

(74) Vertreter: **Harrison, Robert John**
**Sonnenberg Harrison Partnerschaft mbB**
**Herzogspitalstraße 10a**
**80331 München (DE)**

(54) **AUTOMATISIERTE FUNKTIONSKALIBRIERUNG**

(57)   Computerimplementiertes Verfahren (100) für eine Kalibrierung einer oder mehrerer Funktionen (75) einer Regelungseinheit (35). Das Verfahren (100) umfasst ein Eingeben (S120) einer Vielzahl von Steuersignalen (25b) in ein Aktuatormodell (40), ein Verarbeiten (S130) der Steuersignale (25b) in dem Aktuatormodell (40) und ein Ausgeben (S140) von Aktuatorzuständen (45). Das Verfahren (100) umfasst ferner ein Verarbeiten (S150) der ausgegebenen Aktuatorzustände (45) in einer virtuellen Einheit (50) und ein Ausgeben (S160) von Ergebnisparametern (25c, 25c', 25c''). Das Verfahren (100) umfasst zudem ein Vergleichen der ausgegebenen Ergebnisparameter (25c, 25c', 25c'') mit Zielwerten (25d) in einer Vorverarbeitungseinheit (55) ein Ermitteln (S180) einer Beobachtung (60) und einer Belohnung (65) aus den ausgegebenen Ergebnisparametern (25c, 25c', 25c'') in einer Vorverarbeitungseinheit (55), ein Trainieren (S253) eines Trainings-Aktuatormodells (90) unter Berücksichtigung der Beobachtung (60) und der Belohnung (65) durch ein bestärkendes Lernen (80) und dabei ein Erzeugen (S190) von angepassten Aktuatorzuständen (95, 95'). Das Verfahren umfasst zudem ein iteratives Verarbeiten (S250) der angepassten Aktuatorzustände (95, 95') zu Ergebnisparametern (25c, 25c', 25c'') in der virtuellen Einheit (50) und ein iteratives Vergleichen (S260) der verarbeiteten Ergebnisparameter (25c, 25c', 25c'') mit den Zielwerten (25d) bis zum Erreichen eines Endwerts.

FIG. 1

**Beschreibung**

**TECHNISCHES GEBIET DER ERFINDUNG**

Die Erfindung betrifft eine Vorrichtung und ein Verfahren für eine automatisierte Funktionskalibrierung mit bestärkendem Lernen.

**HINTERGRUND DER ERFINDUNG**

Moderne Maschinen, Anlagen, Fahrzeuge und Antriebe verfügen über eine Vielzahl von Regel- bzw. Steuergeräten. Diese Regel- bzw. Steuergeräte regeln bzw. steuern die Maschinen, Anlagen, Fahrzeuge und Antriebe aufgrund von vordefinierten Regel- bzw. Steuerprogrammen auf Grundlage von erfassten Ein- und Ausgangsgrößen eines Regel- bzw. Steuerprozesses und einer Vielzahl von vordefinierten Zielwerten.

Eine Programmierung dieser Regel- bzw. Steuergeräte ist aufgrund einer Vielzahl von Wechselwirkungen zwischen den Ein- und Ausgangsgrößen für die Erreichung der vordefinierten Zielwerte zunehmend komplex. Zudem sind für die Programmierung dieser Regel- bzw. Steuergeräte meist zeit- und kostenaufwendige Versuche an Laboraufbauten der zu regelnden bzw. steuernden Maschinen, Anlagen, Fahrzeuge und Antriebe notwendig, um die Wechselwirkungen zwischen den Ein- und Ausgangsgrößen für die Erreichung der vordefinierten Zielwerte zu ermitteln.

Auf Grundlage der ermittelten Wechselwirkungen nehmen spezialisierte Kalibrieringenieure Änderungen an den Regel- bzw. Steuerprogrammen der Regel- bzw. Steuergeräte vor, um eine Abweichung von den vordefinierten Zielwerten zu verringern und hierdurch die Erreichung der Zielwerte zu optimieren. Diese Optimierung erfolgt jedoch oftmals empirisch und führt nicht immer zu einem optimalen Ergebnis in allen Betriebspunkten der Maschinen, Anlagen, Fahrzeuge und Antriebe. Zudem erfordert diese Optimierung durch die spezialisierte Kalibrieringenieure bei steigender Variantenzahl einen hohen manuellen Kalibrieraufwand.

Im Stand der Technik sind Lösungen zur Optimierung der Erreichung der Zielwerte bekannt. Die US Patentschrift US 11,027,743 B1 (Dutordoir et.al., Secondmind Ltd.) beschreibt zum Beispiel ein System, ein Verfahren und eine Vorrichtung zur Ermittlung von relevanten Ein- und Ausgangsgrößen für Regel- bzw. Steuerprozesse unter Verwendung von Gauß-Prozessen. Das System dieser Patentschrift umfasst mindestens einen Sensor, einen Verarbeitungsschaltkreis und einen Speicherschaltkreis. Der mindestens eine Sensor ist eingerichtet, um eine oder mehrere Eigenschaften eines physikalischen Systems mit einer Vielzahl von beeinflussbaren Parametern zu messen. Das Verfahren umfasst das Ermitteln einer Vielzahl von Kandidatendatensätzen, welche die Eingangsgrößen enthalten. Systemantworten des Systems auf die Eingangsgrößen werden unter Verwendung der Sensoren und des Verarbeitungsschaltkreises als Ausgangsgrößen erfasst. Diese Ausgangsgrößen werden mit Zielwerten verglichen und eine Zielerreichung wird ermittelt. Für jeden Kandidatendatensatz wird ein Datenpunkt erzeugt und es werden zusätzliche Datenpunkte ermittelt welche einen Bias-Wert umfassen. Der Bias-Wert ist ein Hyperparameter, der vorgegeben wird oder aus Testdaten erlernt werden kann. Die zusätzlichen Datenpunkte werden auf eine Hypersphäre projiziert und mittels eines weiteren Gauß-Prozesses analysiert. Auf Grundlage dieser Analyse werden zusätzliche Steuersignale bzw. optimierte Kalibrierparameter für einen Betrieb des Systems ermittelt.

Ferner sind im Stand der Technik auch Lösungen zur automatisierten Ermittlung relevanter Eingangsgrößen oder relevanter Kalibrierparameter bekannt. EP 2 513 727 A1 (Baumanns et.al., Robert Bosch GmbH) beschreibt ein System und ein Verfahren zum Ermitteln von Funktionsparametern für ein Steuergerät. Das System wird in unterschiedlichen Betriebspunkten betrieben und eine Systemantwort des Systems wird in diesen Betriebspunkten ermittelt. Auf Grundlage der Betriebspunkte sowie der Systemantwort des Systems wird ein Kriterienmodell berechnet, welches Abhängigkeiten zwischen einer Vielzahl von aus der Systemantwort gebildeten Zielgrößen umfasst. Ein Optimierer verwendet das Kriterienmodell und prüft, ob ein Satz von Funktionsparametern zur Verbesserung oder Verschlechterung des Verhaltens des Systems führt. Dadurch ermittelt der Optimierer sukzessive die Kombination von Parametern, bei welcher sich ein optimales Verhalten des Systems bezüglich der Kriterien einstellt bzw. ergibt. Diese Optimierung erfolgt in einem iterativen Ablauf und für jeden Betriebspunkt, bis das optimale Verhalten gefunden wird.

DE 10 020 448 B4 (Bargende et.al., Daimler Chrysler AG) beschreibt ein Verfahren und eine Vorrichtung zur Optimierung eines Betriebs eines Verbrennungsmotors. Ziel hierbei ist es, den Zeitaufwand für die Optimierung des Betriebs des Verbrennungsmotors durch Verwendung eines virtuellen Motormodells des Verbrennungsmotors zu reduzieren. Zunächst werden in dem Verfahren Einstellgrenzen für Aktuatoren des Verbrennungsmotors ermittelt. Der Verbrennungsmotor wird in verschiedenen Betriebspunkten unter Variation von Stellgrößen betrieben und eine Vielzahl von Ein- und Ausgangsparametern in einem Motorprüfstand erfasst. Das virtuelle Motormodell des Verbrennungsmotors wird auf Basis der Betriebspunkte, der variierten Stellgrößen und der erfassten Ein- und Ausgangsparameter ermittelt. Anschließend wird ein Motorsteuergerät mit Hilfe des virtuellen Motormodells programmiert. Eine Zielerreichung wird unter Verwendung des virtuellen Motormodells ermittelt.

EP 2 791 827 A2 (Wallner et.al., AVL List GmbH) beschreibt ein Verfahren zur Auswertung einer Lösung eines multikriteriellen Optimierungsproblems. Ziel hierbei ist es, ein Verfahren zur Visualisierung und Analyse einer Lösung des multikriteriellen Optimierungsproblems anzugeben, welches eine Auswertung der gefundenen Lösungen ermöglicht. Hierdurch soll eine Auswahl einer der gefundenen Lösungen als optimale Lösung des multikriteriellen Optimierungsproblems ermöglicht werden. Das Verfahren umfasst ein Visualisieren einer Menge der gefundenen Lösungen des multikriteriellen Optimierungsproblems in einem Modellraum als zwei- oder dreidimensionale Diagramme. Diese Diagramme werden in Abhängigkeit einer Zielfunktionen mit einem zulässigen Variationsraum dargestellt.

WO 2021/105313 A1 (Picheny et.al., Secondmind Ltd.) beschreibt ein Verfahren für ein parallelisiertes Trainieren eines Maschinenlernmodells unter Verwendung eines Trainingdatensatzes und einer Vielzahl von unabhängigen Verarbeitungsknoten. Das Verfahren umfasst ein Einstellen von Anfangswerten für Parametersätze für das Maschinenlernmodell und ein Bereitstellen von Anfangswerten für jeden der Verarbeitungsknoten. Das Verfahren beinhaltet ferner ein iteratives Erzeugen einer Optimierungsspur für jeden der Verarbeitungsknoten und jeweiliger aktualisierter Werte für den Satz von Parametern gemäß einer Folge von stochastischen Gradientenschritten unter Verwendung einer jeweiligen Lernrate. Das Verfahren umfasst zudem ein iteratives Aktualisieren des Maschinenlernmodells unter Verwendung der erzeugten Optimierungsspuren und ein iteratives Ermitteln eines Verarbeitungsknotens welcher, auf der Grundlage der erzeugten Optimierungsspuren, die beste Leistung im Vergleich der Verarbeitungsknoten erzielt. Das Verfahren umfasst ferner ein Aktualisieren der Parametersätze für jeden der Verarbeitungsknoten auf die Werte des Verarbeitungsknotens, der im Vergleich die beste Leistung erzielt.

Novak M.: Machine Learning based Air Path Control for Diesel Engines (in: Masterarbeit, TU Graz, April 2021) beschreibt die Entwicklung eines Simulationsmodells für die Luftpfadsteuerung in Dieselmotoren. Hierfür schlägt die Masterarbeit eine Erzeugung von datengetriebenen Reglern mittels Reinforcement Learning vor, welche durch Interaktion mit einem bereitgestellten Simulationsmodell selbständig eine "optimale" Regelstrategie erlernen sollen. Ein computerimplementiertes Verfahren für eine Kalibrierung eines Satzes von Funktionen eines Steuergerätes und/oder ein computerimplementiertes Verfahren zur Ermittlung optimaler Parameter für eine zu kalibrierende Funktion werden hingegen nicht offenbart.

Garg P., Silvas E., Willems F.: Potential of Machine Learning Methods for Robust Performance and Efficient Engine Control Development (in: IFAC PapersOnLine 2021, 189-195) gibt einen Überblick über verschiedene Typen von Maschinenlernalgorithmen. Ein computerimplementiertes Verfahren für eine Kalibrierung eines Satzes von Funktionen eines Steuergerätes und/oder ein computerimplementiertes Verfahren zur Ermittlung optimaler Parameter für eine zu kalibrierende Funktion werden hingegen nicht offenbart.

Die deutsche Patentanmeldung DE 10 2019 126 244 A1 (Skull, Porsche AG) offenbart ein System und Verfahren zur Kalibrierung der Steuereinheit eines Elektromotors. Das System beruht auf einem Lernverstärkungs-Agenten (LV) (Reinforcement Learning Agent), der für einen bestimmten Zustand aus einer Menge verfügbarer Zustände zumindest eine Aktion aus einer Menge verfügbarer Aktionen auswählt. Die Zustände erhält der Agent von einem Zustandsmodul, auf das der LV-Agent zugreifen kann und das vorzugsweise einen Datenspeicher mit Daten von verschiedenen Sensoren und Datenquellen sowie Berechnungsergebnisse enthält. Auf Grundlage dieses Zustands ermittelt der LV-Agent für einen Zustand eine oder mehrere der Berechnungsfunktionen. Der LV-Agent berechnet für diesen bestimmten Zustand und mittels der ausgewählten Berechnungsfunktionen einen modellierten Wert der Kenngröße KM, wobei der gemessene oder berechnete Wert für zumindest einen Parameter einen Eingabewert für die Berechnungsfunktionen darstellt.

Ein aufgrund von Messergebnissen ermittelter, realer Wert KR für die Kenngröße wird von einem Umgebungsmodul an das Zustandsmodul bereitgestellt und in diesem mit dem berechneten Wert KM verglichen. Auf Grundlage dieses Vergleichs wird ein einem Belohnungsmodul der ausgewählten Aktion eine Belohnung zugeordnet, die an den LV-Agenten übermittelt wird. In LV-Agenten sind zudem als Aktionen die Aktionen A+, A0 und A- definiert, die aufgrund der verwendeten Berechnungsverfahren ausgewählt werden, um eine Anpassung eines gemessenen oder berechneten Parameterwertes eines Parameters aus der Menge der Parameter in einer Wertetabelle vorzunehmen. Diese deutsche Patentanmeldung offenbart demnach ein System, in welchem iterativ Aktionen von dem LV-Agenten ausgewählt und von dem Belohnungsmodul bewertet werden. Dies erfolgt auf Grundlage eines Vergleichs des Berechnungsergebnisses KM und des realen Werts KR. Die deutsche Patentanmeldung offenbart jedoch nicht, dass einzelne Funktionen aus dem Satz der Funktionen unter Berücksichtigung der Beobachtung und der Belohnung durch ein bestärkendes Lernen trainiert werden können.

Das US-Patent US 11 002 202 B2 (Narang et.al., Cummins Inc.) beschreibt Luftbehandlungssysteme für Motoren. Eine Luftsteuerungseinheit beinhaltet einen Controller, der Luftsteuerungsaktoren eines Motorsystems steuert, sowie eine Verarbeitungseinheit, die mit den Sensoren und dem Controller angebunden ist. Die Verarbeitungseinheit beinhaltet einen Agenten, der eine Richtlinienfunktion lernt, die für die Verarbeitung des aktuellen Zustands trainiert ist, ein Steuersignal ermittelt, das an den Controller zu senden ist, indem er die Richtlinienfunktion verwendet, nachdem er den aktuellen Zustand als Eingabe erhalten hat, und das Steuersignal an den Controller ausgibt. Das US-Patent beschreibt daher ein Regelsystem mit zusätzlicher Anwendung eines Maschinenlernalgorithmus. Ein computerimplementiertes Verfahren für eine Kalibrierung eines Satzes von Funktionen eines Steuergerätes und/oder ein computerimplementiertes Verfahren zur Ermittlung optimaler Parameter für eine zu kalibrierende Funktion werden hingegen nicht offenbart.

Aus dem Stand der Technik sind Lösungen zur hardwarebasierten Optimierung von Regel- bzw. Steuerprozessen bekannt. Lösungen zur Reduktion des Zeit- und Kostenaufwands der Optimierung von Regel- bzw. Steuerprozessen unter Verwendung von virtualisierten Hardwarekomponenten und strukturierter Variation der Funktionen werden jedoch nicht offenbart. Auch die Verwendung von Maschinenlernalgorithmen für die Optimierung von Regel- bzw. Steuerprozessen ohne Hardwareaufbauten wird nicht offenbart.

## ZUSAMMENFASSUNG DER ERFINDUNG

Vor diesem Hintergrund wird eine Vorrichtung und ein computerimplementiertes Verfahren für eine automatisierte Funktionskalibrierung mit bestärkendem Lernen bereitgestellt, welche es ermöglichen, den Zeit- und Kostenaufwand für die Optimierung von Regel- bzw. Steuergeräten für Maschinen, Anlagen, Fahrzeuge und Antriebe beispielsweise durch eine teilweise bzw. vollständige Virtualisierung der Hardware und Trainieren eines Bestärkenden Lernen Algorithmus weiter zu reduzieren und eine Güte der Zieleerreichung weiter zu erhöhen. Zudem wird ein Verfahren und eine Vorrichtung zur Bereitstellung für einen menschlichen Anwender vorhersehbarer bzw. nachvollziehbarer Optimierungsergebnisse bereitgestellt.

Gemäß einem Aspekt umfasst ein computerimplementiertes Verfahren für eine Kalibrierung eines Satzes von Funktionen eines Steuergerätes ein Eingeben von mindestens einem Lastzyklus und Umgebungsbedingen in das Steuergerät und ein Ermitteln einer Vielzahl von Ergebnisparametern unter Verwendung einer Mehrzahl des Satzes Funktionen. Ferner umfasst das Verfahren ein Eingeben der Vielzahl der Steuersignale in ein Aktuatormodell. Das Verfahren umfasst weiter ein Verarbeiten der Steuersignale in dem Aktuatormodell und ein Ausgeben von Aktuatorzuständen. Das Verfahren umfasst zudem ein Verarbeiten der ausgegebenen Aktuatorzustände in einer virtuellen Einheit und Vergleichen der ausgegebenen Ergebnisparameter mit Zielwerten in einer Vorverarbeitungseinheit.

Das Verfahren umfasst weiter ein Ermitteln einer Beobachtung und einer Belohnung aus den ausgegebenen Ergebnisparametern in der Vorverarbeitungseinheit. Das Verfahren umfasst ferner ein Ermitteln von angepassten Aktuatorzuständen in einem Trainings-Aktuatormodell und ein Verarbeiten der angepassten Aktuatorzustände zu Ergebnisparametern in der virtuellen Einheit. Das Verfahren umfasst ferner ein Trainieren eines Agenten einer Funktion aus dem Satz der Funktionen unter Berücksichtigung der Beobachtung und der Belohnung durch ein bestärkendes Lernen. Das Verfahren umfasst zudem ein iteratives Vergleichen der verarbeiteten Ergebnisparameter mit den Zielwerten, bis zum Erreichen eines Endwerts.

Das computerimplementierte Verfahren umfasst ferner ein Wiederholen des Trainierens mit einer weiteren Funktion aus dem Satz der Funktionen.

Bei dem computerimplementierten Verfahren gemäß einem ersten Anspruch umfasst das Aktuatormodell die Aktuatorzustände von zumindest eines von einem mechanischen Aktuator, einem elektrischen Aktuator, einem elektromagnetischen oder einem hydraulischen Aktuator.

Bei dem computerimplementierten Verfahren umfassen die Aktuatorzustände ferner mindestens eine Ventilstellung, eine Durchflussmenge, einen Druck, einen Drehwinkel oder einen Hub.

Bei dem computerimplementiertes Verfahren umfasst das Verfahren ferner ein Berechnen der Steuersignale in einem Steuergerät unter Verwendung mindestens eines von einem Lastzyklus und einer Vielzahl von Umgebungsbedingungen.

Bei dem computerimplementierten Verfahren umfasst der Lastzyklus eine Motordrehzahl-Motorleistung-Kurve.

Bei dem computerimplementierten Verfahren umfassen die Umgebungsbedingungen mindestens eine Temperatur, einen Druck, eine Dichte, eine Zusammensetzung einer Prozessluft und mindestens eine Temperatur, einen Energiegehalt, eine Dichte oder einen Heizwert eines Verbrennungsmediums.

Bei dem computerimplementierten Verfahren gemäß einem der Ansprüche umfassen die Ergebnisparameter mindestens einen Verbrauch eines Verbrennungsmediums und einer Prozessluft, eine Temperatur eines Abgases, eine Zusammensetzung des Abgases, eine Dichte des Abgases, einen $CO_2$-Ausstoß oder ein Drehmoment.

Das System zur Kalibrierung der Regelungseinheit umfasst mindestens einen Prozessor zur Durchführung des Verfahren zum Ermitteln zumindest eines von den Eingangsparametern, den Ergebnisparametern, den Zielwerten, den Aktuatorzuständen oder den angepassten Aktuatorzuständen zum Steuern der virtuellen Einheit. Das System umfasst ferner einen Speicher zum Speichern zumindest eines von der Regelungseinheit, dem Aktuatormodell, der virtuellen Einheit, der Vorverarbeitungseinheit und dem Trainings-Aktuatormodell.

Ferner wird eine Verwendung des computerimplementierten Verfahrens für eine Kalibrierung einer oder mehrerer Funktionen einer Regelungseinheit vorgestellt.

## BESCHREIBUNG DER FIGUREN

Fig. 1 zeigt eine Übersicht eines Systems für eine automatisierte Funktionskalibrierung mit bestärkendem Lernen.

Fig. 2A und Fig. 2B sind ein Prozessablauf-Diagramm eines ersten computerimplementierten Verfahrens für die Kalibrierung einer oder mehrerer Funktionen $f_i(x)$.

Fig. 3 zeigt ein Liniendiagramm, welches einen Verlauf von Funktionen $f_i(x)$ und $g_i(x)$ darstellt.

Fig. 4 zeigt ein Prozessablauf-Diagramm eines zweiten computerimplementierten Verfahren zur Ermittlung optimierter Parameter für kalibrierte Funktionen $f_{p*\_i}(x)$.

Fig. 5 zeigt ein weiteres Beispiel mit Komponenten einer Emissionssteuerung in dieselmotorgetriebenen Kraftfahrzeugen.

Fig. 6 zeigt einen exemplarischen Verlauf eines iterativen Trainierens des Agenten $g_i(x)$ anhand des Wertes der Belohnung, einem Verlust, einer Entropie und einer durchschnittlichen Position des AGR-Ventils über den Verlauf der Iterationszyklen.

## DETAILLIERTE BESCHREIBUNG DER ERFINDUNG

Die Erfindung wird nun auf der Grundlage der Zeichnungen beschrieben. Es wird davon ausgegangen, dass die hier beschriebenen Ausführungsformen und Aspekte der Erfindung nur Beispiele sind und den Schutzumfang der Ansprüche in keiner Weise einschränken. Die Erfindung wird durch die Ansprüche und deren Äquivalente definiert. Es wird davon ausgegangen, dass Merkmale eines Aspekts oder einer Ausführungsform der Erfindung mit einem Merkmal eines anderen Aspekts oder anderer Aspekte und/oder Ausführungsformen der Erfindung kombiniert werden können.

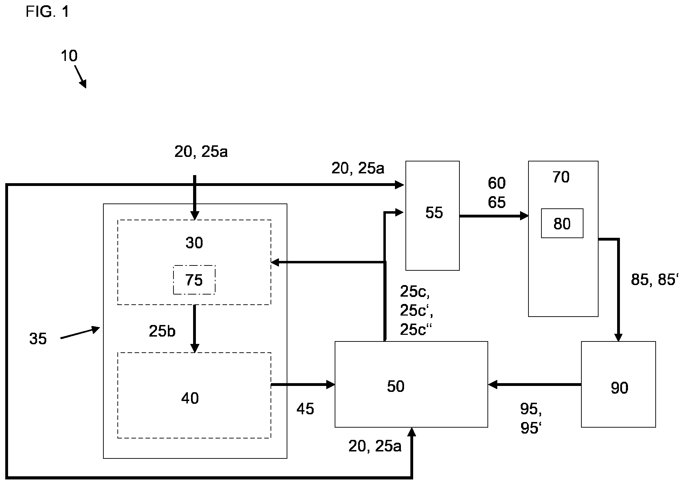

Fig. 1 zeigt eine Übersicht eines Systems 10 für eine automatisierte Kalibrierung eines Satzes von Funktionen $f_i(x)$ eines Steuergerätes 30 mit sogenanntem "bestärkendem" Lernen 80 (häufig auch mit dem englischen Begriff "Reinforcement Learning" bezeichnet).

Das System 10 umfasst eine Regelungseinheit 35, eine virtuelle Einheit 50, eine Vorverarbeitungseinheit 55, ein Lernmodul 70 und ein Trainings-Aktuatormodell 90. Die Regelungseinheit 35 umfasst das Steuergerät 30 ein Aktuatormodell 40. Das Aktuatormodell 40 ist mit der virtuellen Einheit 50 verbunden. Das Lernmodul 70 enthält ein Modul zur Durchführung des bestärkenden Lernens 80. Das Lernmodul 70 trainiert die einzelnen Funktionen $f_i(x)$ wie unten ausgeführt.

Ferner kann das System 10 mindestens einen Prozessor oder eine Mehrzahl von verteilten Prozessoren mit dazugehörigem Speicher umfassen. Die Prozessoren können eingebettete Prozessoren oder separate Module sein. Die Prozessoren und Speicher sind in Fig. 1 nicht dargestellt.

In dem System 10 werden in einem ersten computerimplementierten Verfahren 100 eine oder mehrere der Funktionen $f_i(x)$ zunächst einzeln trainiert. Bei dem Trainieren einer der einzelnen Funktionen $f_i(x)$ werden die sonstigen Funktionen $f_i(x)$ nicht geändert. Nach dem Trainieren der einzelnen Funktionen $f_i(x)$ wird ein Optimierungsschritt in einem zweiten computerimplementierten Verfahren 200 durchgeführt.

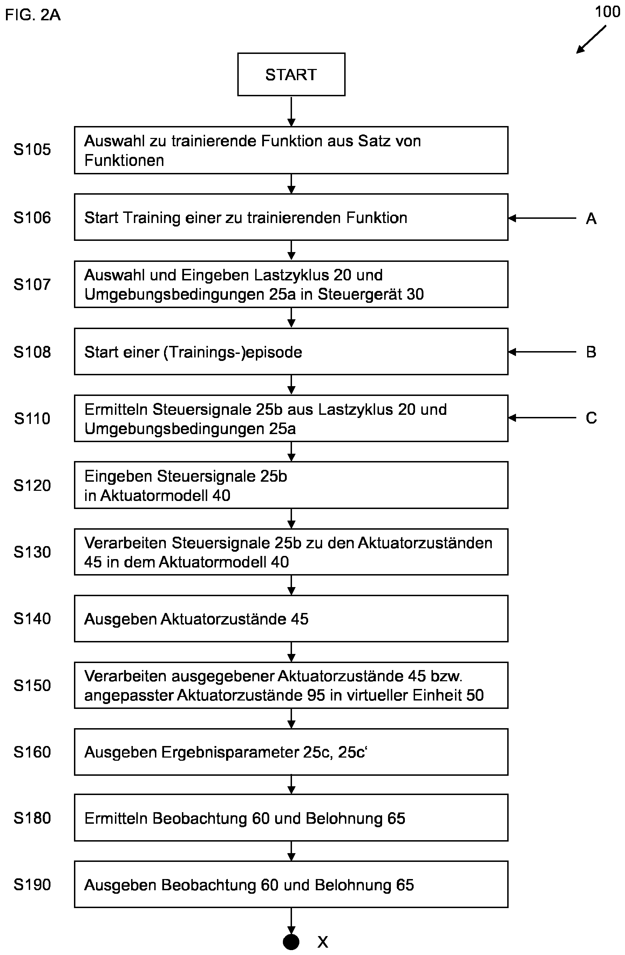

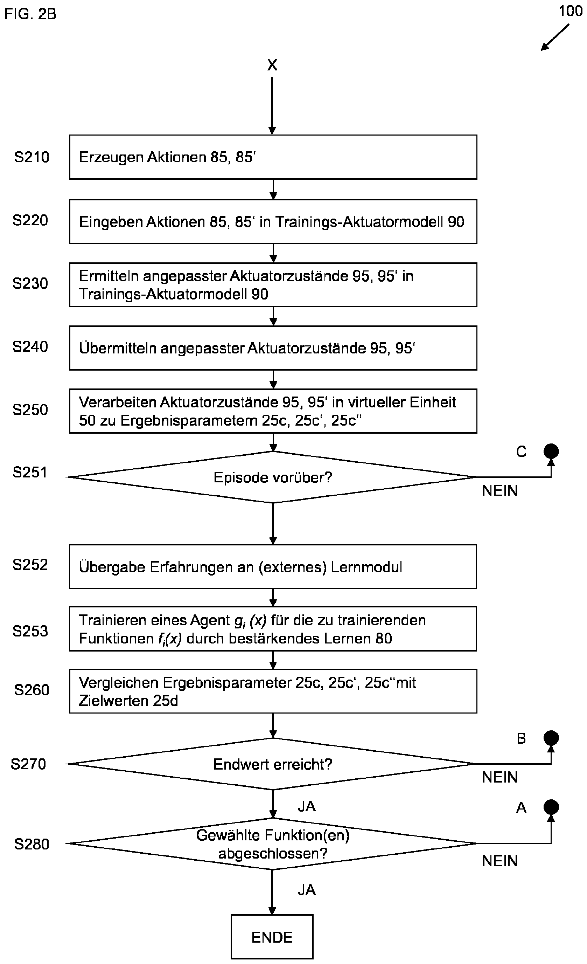

Fig. 2A und Fig. 2B zeigen ein Prozessablauf-Diagramm des ersten computerimplementierten Verfahrens 100 für die Kalibrierung des Satzes der Funktionen $f_i(x)$ des Steuergeräts 30. Das erste computerimplementierte Verfahren 100 wird nun anhand eines ersten, nicht-limitierenden Beispiels näher beschrieben. In diesem ersten Beispiel ist das Steuergerät 30 ein Verbrennungsmotor-Steuergerät für einen Verbrennungsmotor, z.B. einen Dieselmotor. Das Steuergerät 30 beinhaltet in diesem ersten Beispiel einen Satz von Funktionen $f_i(x)$, die das Verbrennungsmotor-Steuergerät für den Dieselmotor abbilden.

Fig. 2A zeigt einen ersten Teil des ersten computerimplementierten Verfahrens 100. In diesem ersten Teil werden die Funktionen $f_i(x)$ verarbeitet, die zunächst nicht trainiert werden. In einem zweiten Teil des Verfahrens 100 werden die einzelnen Funktionen $f_i(x)$ jeweils einzeln trainiert. Es wird verstanden, dass diese zwei Teile des ersten computerimplementierten Verfahrens 100 gleichzeitig ausgeführt werden. Die beiden Teile des computerimplementierten Verfahrens 100 werden mehrmals ausgeführt, bis alle Funktionen $f_i(x)$ trainiert sind.

Wie oben aufgeführt umfasst das Steuergerät 30 den Satz von Funktionen $f_i(x)$ zur Steuerung von Geräten, zum Beispiel, Maschinen, Anlagen, Fahrzeugen oder Antrieben. Das Steuergerät 30 kann ein virtuelles Modell des Steuergeräts 30 oder ein physisches Steuergerät 30 (auch als "Hardware in the Loop" bezeichnet) sein. Das Steuergerät 30 kann auch eine Kombination von dem virtuellen Modell des Steuergeräts 30 und dem physischen Steuergerät 30 sein.

Der Satz von Funktionen $f_i(x)$ umfasst eine Vielzahl von Funktionen $f_i(x)$. Zur einfacheren Darstellung soll hier davon ausgegangen werden, dass der Satz von Funktionen $f_i(x)$ in diesem ersten Beispiel beispielsweise eine erste Funktion $f_1(x)$, eine zweite Funktion $f_2(x)$ und eine dritte Funktion $f_3(x)$ umfasst. Jede der Funktionen $f_{1,2,3}(x)$ aus dem Satz der Funktionen $f_i(x)$ beinhaltet ein Parametersatz $p_i$. In dem vorliegenden Beispiel umfasst die erste Funktion $f_1(x)$ einen ersten Parametersatz $p_1$, die zweite Funktion $f_2(x)$ einen zweiten Parametersatz $p_2$ und die dritte Funktion $f_3(x)$ einen dritten Parametersatz $p_3$. Diese Parametersätze $p_i$ umfassen eine Vielzahl von einzelnen Parametern. Die Art der Parameter ist von der jeweiligen Funktion $f_{1,2,3}(x)$ aus dem Satz der Funktionen $f_i(x)$ abhängig.

In Schritt S105 wird eine zu trainierende Funktion $f_i(x)$ aus dem Satz der Funktionen $f_i(x)$ ausgewählt und über die Vorverarbeitungseinheit 55 an das Lernmodul 70 übergeben. Diese Auswahl kann beispielsweise durch einen Nutzer mittels einer Bedienoberfläche (nicht dargestellt) oder automatisch erfolgen. In dem ersten Beispiel soll die erste Funktion $f_1(x)$ trainiert werden. Um die erste Funktion $f_1(x)$ zu trainieren, wird diese erste Funktion $f_1(x)$ an das Lernmodul 70 übergeben. Die verbleibenden Funktionen $f_2(x)$ und $f_3(x)$ aus dem Satz der Funktionen $f_i(x)$ werden hingegen in dem Steuergerät 30 verarbeitet.

In Schritt S106 beginnt ein Training der zu trainierenden Funktion aus dem Satz der Funktionen $f_i(x)$.

In Schritt S107 werden der Lastzyklus 20 und die Umgebungsbedingungen 25a ausgewählt und in das Steuergerät 30 eingegeben. Diese Auswahl kann automatisch oder durch den Nutzer (nicht dargestellt) erfolgen. Der Lastzyklus 20 umfasst Informationen für das Steuergerät 30 wie beispielsweise ein zu erreichendes Drehmoment des Dieselmotors, eine zu erreichende Schubkraft oder eine zu erreichende Drehzahl-Leistungs-Kurve des Dieselmotors. Die Umgebungsbedingungen 25a umfassen beispielsweise mindestens eine Temperatur, einen Druck, eine Dichte oder eine Zusammensetzung einer Prozessluft und mindestens eine Temperatur, einen Energiegehalt, eine Dichte, eine Zusammensetzung oder einen Heizwert eines Verbrennungsmediums für Verwendung in dem Dieselmotor. Diese genannten Umgebungsbedingungen sind nur beispielhaft aufgeführt und andere Umgebungsbedingungen 25 können verwendet werden.

Das Training des Agenten $g_i(x)$ für die zu trainierenden Funktionen aus dem Satz der Funktionen $f_i(x)$ erfolgt in Episoden. Eine Episode bezeichnet eine Abfolge von Zuständen, Aktionen und Belohnungen, die mit einem Endzustand endet. In Schritt S108 beginnt eine (Trainings-)Episode.

In Schritt S110 wird mit Hilfe dieses Satzes von Funktionen $f_i(x)$ aus dem Lastzyklus 20 und den Umgebungsbedingungen 25a die Vielzahl der Steuersignale 25b in dem Steuergerät 30 ermittelt. In Schritt S120 wird die Vielzahl der in Schritt S110 ermittelten Steuersignale 25b in das Aktuatormodell 40 eingegeben.

In Schritt S130 werden die Steuersignale 25b in dem Aktuatormodell 40 zu den Aktuatorzuständen 45 verarbeitet. Das Aktuatormodell 40 bildet ein Verhalten einer Vielzahl von Aktuatoren in dem Dieselmotor ab. Das Aktuatormodell 40 kann ein virtuelles Modell der Aktuatoren oder ein physisches Modell der Aktuatoren (auch als "Hardware in the Loop" ausgebildet) sein. Das Aktuatormodell 40 kann auch eine Kombination des virtuellen Modells und des physischen Modells sein.

Das Aktuatormodell 40 bildet Aktuatorzustände 45 beispielsweise von zumindest einem mechanischen Aktuator, einem elektrischen Aktuator, einem elektromagnetischen Aktuator und/oder einem hydraulischen Aktuator ab. Die Aktuatorzustände 45 können z.B. eine Ventilstellung, eine Durchflussmenge, einen Druck, einen Drehwinkel oder einen Hub des Aktuators sein. In dem ersten Beispiel des Dieselmotors umfassen die Aktuatorzustände 45 beispielsweise eine Ventilstellung von Ein- oder Auslassventilen oder eine Kolbenstellung eines Kolbens im Dieselmotor.

Das Verarbeiten in dem Aktuatormodell 40 umfasst in diesem ersten "Dieselmotor"-Beispiel die Ermittlung der Ergebnisparameter 25c durch eine Modellierung des Verhaltens des Dieselmotors beispielsweise mit Hilfe einer Software wie Simulink. Simulink ist eine auf MATLAB basierende grafische Programmierumgebung für eine Modellierung, Simulation und Analyse dynamischer Systeme mit einer Vielzahl von Parametern. MATLAB ist eine von MathWorks entwickelte, herstellerspezifische Programmiersprache sowie eine Softwareumgebung für numerische Berechnungen.

In Schritt S140 wird die Vielzahl von Aktuatorzuständen 45 an die virtuelle Einheit 50 ausgegeben. In Schritt S150 werden die ausgegebenen Aktuatorzustände 45 in der virtuellen Einheit 50 zu den Ergebnisparametern 25c verarbeitet. Dieses Verarbeiten der Aktuatorzustände 45 in der virtuellen Einheit 50 umfasst in dem ersten Beispiel eine Simulation des Dieselmotors unter Verwendung der Aktuatorzustände 45. Die Simulation des Dieselmotors erfolgt beispielsweise mit Hilfe einer Software oder unter Anwendung eines Hardware- bzw. Hardware-in-the-Loop-Prüfstands. In Schritt S160 werden die Ergebnisparameter 25c an zumindest das Steuergerät 30 und/oder die Vorverarbeitungseinheit 55 ausgegeben.

Die ausgegebenen Ergebnisparameter 25c aus der virtuellen Einheit 50 mit abgespeicherten Zielwerten 25d verglichen. Die abgespeicherten Zielwerte 25d umfassen in dem ersten Beispiel z.B. Zielwerte für einen Verbrauch des Verbrennungsmediums und Zielwerte für einen Verbrauch der Prozessluft, Zielwerte für eine Temperatur eines Abgases, Zielwerte für eine Zusammensetzung des Abgases, Zielwerte für eine Dichte des Abgases, Zielwerte für einen $CO_2$-Ausstoß oder Zielwerte für ein Drehmoment des Dieselmotors.

In Schritt S180 werden aus diesem Vergleich eine erste Beobachtung 60 und eine erste Belohnung 65 ermittelt. Die erste Beobachtung 60 umfasst hierbei die Signale, die als Eingang in die zu kalibrierende Funktion aus dem Satz der Funktionen $f_i(x)$ einfließen. Im ersten Beispiel (Dieselmotor) können die Signale beispielsweise die Werte von Temperaturen, Drücken, Durchflussraten, etc. umfassen. Diese Signale sind üblicherweise skalare Werte, es könnten aber beispielsweise auch Bilder einer Kamera sein.

Die erste Belohnung 65 umfasst Zielgrößen für die Kalibrierung der Funktionen in einem einzelnen skalaren Wert. Im ersten Beispiel (Dieselmotor) umfasst beispielsweise die Belohnung 65 eine gewichtete Summe aus emittierten Stickoxiden, emittierten Rußpartikeln und gemittelter Abweichung vom einem Solldrehmoment, wobei diese Werte nicht limitierend sind. Die Belohnung 65 wird vorab vom Benutzer festgelegt werden. Diese Festlegung der Belohnung 65 erhöht beispielsweise eine Nachvollziehbarkeit für einen Nutzer. Die Belohnung 65 umfasst ferner Gewichtungsfaktoren $w_1, w_2, w_3, ... , w_n$. Die Gewichtungsfaktoren werden von einem Nutzer definiert und bleiben für den gesamten Kalibrierprozess konstant.

Die Gewichtungsfaktoren $w_1$, $w_2$, $w_3$, ... ,$w_n$ erlauben eine Gewichtung von Parametern der Belohnung 65 relativ zueinander. Die Belohnung 65 wird für das bestärkende Lernen 80 verwendet, um eine Erwartung einer langfristigen Belohnung zu maximieren. In dem ersten Beispiel können die Gewichtungsfaktoren beispielsweise zwei Faktoren umfassen. Beispielsweise können diese zwei Faktoren einen ersten Faktor zur Gewichtung eines Drehmoments des Dieselmotors $w_{DM}$ und einen zweiten Faktor zur Gewichtung eines $CO_2$-Ausstoßes des Dieselmotors $w_{CO2}$ umfassen. Der erste Faktor $w_{DM}$ und der zweite Faktor $w_{CO2}$ können relativ zueinander gewichtet werden. Die Gewichtungsfaktoren können auch eine Vielzahl von Faktoren umfassen. In dem ersten Beispiel wird, sofern ein aktives Ansprechen des Dieselmotors in einem Sportmodus des Fahrzeuges gewünscht ist, der Gewichtungsfaktor für das Drehmoment $w_{DM}$ größer als der Gewichtungsfaktor für den $CO_2$-Ausstoß $w_{CO2}$ des Dieselmotors gewählt. Es gilt für diesen Fall nachfolgende Gleichung.

$$w_{DM} > w_{CO2}$$

Sofern ein verbrauchsoptimiertes Fahren des Fahrzeuges in einem Eco-Modus des Fahrzeuges gewünscht ist, wird der Gewichtungsfaktor für das Drehmoment $w_{DM}$ kleiner als der Gewichtungsfaktor für den $CO_2$-Ausstoß $w_{CO2}$ des Dieselmotors gewählt. Es gilt für diesen geänderten Fall nachfolgende Gleichung.

$$w_{DM} < w_{CO2}$$

In Schritt S190 werden die erste Beobachtung 60, die erste Belohnung 65 und die Gewichtungsfaktoren $w_1$, $w_2$, $w_3$, ... , $w_n$ an das Lernmodul 70 ausgegeben.

Fig. 2B zeigt den zweiten Teil des ersten computerimplementieren Verfahrens 100 aus Fig. 2A zum jeweiligen Trainieren der einzelnen Funktionen $f_i(x)$. In dem Lernmodul 70 wird unter Berücksichtigung der ersten Beobachtung 60 und der Belohnung 65 ein Agent $g_i(x)$ für jede der zu trainierenden Funktionen aus dem Satz der Funktionen $f_i(x)$ unter Verwendung des bestärkenden Lernens 80 trainiert

In Schritt S210 werden iterativ erste Aktionen 85 erzeugt. Die ersten Aktionen 85 werden in Schritt S220 in ein Trainings-Aktuatormodell 90 eingegeben. In Schritt S220 können alternativ die ersten Aktionen 85 anstatt in das Trainings-Aktuatormodell 90 auch in das Aktuatormodell 40 eingegeben werden. Zur Vereinfachung der Darstellung ist das Trainings-Aktuatormodell 90 in Fig. 1 als separate Einheit dargestellt. Jedoch kann das Aktuatormodell 40 beispielsweise auch das Trainings-Aktuatormodell 90 umfassen. Es können also beide Aktuatormodelle 40, 90 in einer gemeinsamen Einheit beinhaltet sein. Der Schritt S220 entspricht im Wesentlichen dem Schritt S120 wie zuvor beschrieben. Der Schritt S220 und der Schritt S120 werden im Wesentlichen zeitgleich ausgeführt.

In dem ersten Beispiel (Dieselmotor) ist es die Aufgabe des Agenten $g_i(x)$, für jede der Funktionen aus dem Satz der Funktionen $f_i(x)$ eine Wechselwirkung zwischen dem Lastzyklus 20, den Umgebungsbedingungen 25a, den Steuersignalen 25b, den durch den Agenten $g_i(x)$ erzeugten ersten Aktionen 85, den angepassten Aktuatorzuständen 95 und den Ergebnisparametern 25c zu ermitteln.

In dem Trainings-Aktuatormodell 90 werden in Schritt S230 auf Grundlage der ersten Aktionen 85 angepasste Aktuatorzustände 95 ermittelt. Diese angepassten Aktuatorzustände 95 werden in Schritt S240 an die virtuelle Einheit 50 übermittelt. Die angepassten Aktuatorzustände 95 werden in Schritt S250 in der virtuellen Einheit 50 zu den Ergebnisparametern 25c verarbeitet (siehe auch Schritt S150). In dem ersten Beispiel (Dieselmotor) umfasst dieses Verarbeiten in Schritt S250 das Verarbeiten der auf Grundlage der ersten Funktion $f_1(x)$ und der zweiten Funktion $f_2(x)$ ermittelten Aktuatorzustände 45 und das Verarbeiten der auf Grundlage der dritten Funktion $f_3(x)$ ermittelten angepassten Aktuatorzustände 95.

In Schritt S251 wird überprüft, ob die Episode vorüber ist. Sofern die Episode noch nicht vorüber ist, werden Schritt S110 bis Schritt S250 erneut durchlaufen. Sofern die Episode bereits vorüber ist, fährt das Verfahren 100 mit Schritt S252 fort.

In Schritt S252 werden die Beobachtung 60 und der Belohnung 65 an das Lernmodul 70 übergeben. Bei dem Lernmodul 70 kann es sich auch um ein externes Lernmodul handeln.

In dem Lernmodul 70 wird in Schritt S253 unter Berücksichtigung der ersten Beobachtung 60 und der Belohnung 65 ein Agent $g_i(x)$ für jede der zu trainierenden Funktionen aus dem Satz der Funktionen $f_i(x)$ unter Verwendung des bestärkenden Lernens 80 trainiert. In dem ersten Beispiel (Dieselmotor) mit den beispielhaften drei Funktionen wird also für die erste Funktion $f_1(x)$ ein erster Agent $g_1(x)$ iterativ trainiert, für die zweite Funktion $f_2(x)$ ein zweiter Agent $g_2(x)$ iterativ trainiert und für die dritte Funktion $f_3(x)$ ein dritter Agent $g_3(x)$ iterativ trainiert. Dieses iterative Trainieren wird beispielsweise durch Softwarebibliotheken wie RLlib vorgenommen. RLlib ist eine Open-Source-Bibliothek für bestärkendes Lernen (auch als "Reinforcement Learning (RL)" bezeichnet). RLlib unterstützt verschiedene Algorithmen für bestärkendes Lernen. RLlib nutzt beispielsweise Bibliotheken für neuronale Netze wie TensorFlow oder PyTorch zur Optimierung des Agenten $g_i(x)$.

Diese Ergebnisparameter 25c werden dann in Schritt S260 in der Vorverarbeitungseinheit 55 iterativ mit den Zielwerten 25d verglichen.

In dem ersten Beispiel (Dieselmotor) entspricht eine Episode beispielsweise dem Abfahren eines bestimmten Lastprofils (z.B. eines RDE- oder eines WLTC-Zyklus). Üblicherweise umfasst das Training des Agenten $g_i(x)$ eine Vielzahl von Episoden für die zu trainierenden Funktionen. Das Training des Agenten $g_i(x)$ wird daher üblicherweise nicht innerhalb einer Episode abgeschlossen, sondern erst, wenn die addierte Belohnung aller durchlaufenen Episoden einen bestimmten Grenzwert erreicht hat. Der Agent $g_i(x)$ wird also iterativ bis zum Erreichen eines Zielwerts der Belohnung 65 oder einem Erreichen eines Iterationsgrenzwertes trainiert. Dieses Erreichen des Zielwerts bzw. des Iterationsgrenzwertes wird als Erreichen eines Endwerts bezeichnet. In Schritt S270 wird ermittelt, ob dieser Endwert erreicht wurde.

Die Belohnung 65 ist ein Maß dafür, wie erfolgreich die vom Agenten $g_i(x)$ für die zu trainierenden Funktionen aus dem Satz der Funktionen $f_i(x)$ ermittelten ersten Aktionen 85 im Hinblick auf das Erreichen der Zielwerte 25d sind. Ein Grad einer Annäherung an die Zielwerte 25d wird durch Erreichen eines Maximalwertes der Belohnung 65 quantifiziert. Alternativ kann auch der Iterationsgrenzwert verwendet werden, um eine Gesamtzahl von Iterationen des Agenten $g_i(x)$ zu begrenzen. Der Endwert kann abhängig von der zu lösenden Aufgabe definiert werden. Sofern der Endwert erreicht wurde, endet der zweite Teil des Trainings für die zu trainierende Funktion aus dem Satz der Funktionen $f_i(x)$. Sofern der Endwert nicht erreicht wurde, werden Schritte S108 bis S270 wiederholt.

Exemplarisch wird hier zur Verdeutlichung eine zweite Iteration der Schritte S108 bis S270 beschrieben. Üblicherweise wird jedoch eine Vielzahl von Iterationen durchlaufen werden wird, bevor der Endwert erreicht wird.

Sofern der Endwert nicht erreicht wurde, wird Schritt S150 erneut durchgeführt. Die angepassten Aktuatorzustände 95 werden (ähnlich den ausgegebenen Aktuatorzuständen 45 aus der ersten Iteration, siehe Schritt S150 zuvor) in der virtuellen Einheit 50 verarbeitet. In Schritt S160 werden zweite Ergebnisparameter 25c' ausgegeben. Diese zweiten Ergebnisparameter 25c' werden mit den Zielwerten 25d verglichen und es werden in Schritt S180 eine zweiter Beobachtung 60 und eine zweite Belohnung 65 ermittelt. Die zweite Beobachtung 60 und die zweite Belohnung 65 werden in Schritt S190 an das Lernmodul 70 übermittelt.

In Schritt S210 werden iterativ zweite Aktionen 85' auf Grundlage dieses angepassten ersten Agenten $g_1(x)$ erzeugt und in die zweiten Aktionen 85' werden Schritt S220 erneut in das Trainings-Aktuatormodell 90 eingegeben. Auf Grundlage dieser zweiten Aktionen 85' werden in Schritt S230 zweite angepasste Aktuatorzustände 95' ermittelt und in Schritt S240 erneut an die virtuelle Einheit 50 übermittelt. Diese zweiten angepassten Aktuatorzustände 95' werden in der virtuellen Einheit 50 in Schritt S250 zu dritten Ergebnisparametern 25c" verarbeitet.

In Schritt S251 wird überprüft, ob die Episode vorüber ist. Sofern die Episode noch nicht vorüber ist, werden Schritt S110 bis Schritt S250 erneut durchlaufen. Sofern die Episode bereits vorüber ist, fährt das Verfahren 100 mit Schritt S252 fort.

In Schritt S252 werden die Beobachtung 60 und der Belohnung 65 an das Lernmodul 70 übergeben.

In Schritt S253 wird der Agent $g_i(x)$ unter Berücksichtigung der zweiten Beobachtung 60 und der zweiten Belohnung 65 durch das bestärkende Lernen 80 trainiert. In dem ersten Beispiel (Dieselmotor) wird der erste Agent $g_1(x)$ der ersten Funktion $f_1(x)$ iterativ angepasst.

Diese dritten Ergebnisparameter 25c" werden in Schritt S260 mit den Zielwerten 25d verglichen. Sofern der Endwert nicht erreicht ist (siehe Schritt S270), werden die Schritte S108 bis S270 erneut durchlaufen. Sofern der Endwert erreicht ist, fährt das Verfahren mit Schritt S280 fort.

Wie oben ausgeführt werden üblicherweise mehrere Funktionen aus dem Satz der Funktionen $f_i(x)$ durch das computerimplementierte Verfahren 100 trainiert. In Schritt S280 wird überprüft, ob weitere Funktionen aus dem Satz der Funktionen $f_i(x)$ trainiert werden sollen. Sofern mehr als eine Funktion trainiert werden soll, werden Schritte S106 bis S280 erneut ausgeführt. In Schritt S108 wird dann eine nächste zu trainierende Funktion aus dem Satz der Funktionen $f_i(x)$ ausgewählt. Nach dem Trainieren aller Funktionen aus dem Satz der Funktionen $f_i(x)$ ist das erste computerimplementierte Verfahren 100 abgeschlossen und es existiert für jede der trainierten Funktionen ein trainierter Agent $g_i(x)$. In dem ersten Beispiel (Dieselmotor) existiert nach dem Abschluss des Verfahrens ein trainierter Agent $g_1(x)$ für die erste Funktion $f_1(x)$. Dieser trainierte Agent $g_1(x)$ stellt einen optimalen Verlauf der ersten Funktion $f_1(x)$ für die gegebenen Lastzyklen 20 und Umgebungsbedingungen 25 dar.

Dieser trainierte Agent $g_i(x)$ umfasst jedoch üblicherweise eine Vielzahl von Parametern $p_{i\_n}$ und ist somit für einen menschlichen Nutzer nur schwer nachvollziehbar. In der industriellen Anwendung der Steuergerätoptimierung müssen die Funktionen des Steuergeräts 30, gerade bei sicherheits- oder zulassungskritischen Anwendungen, für einen menschlichen Nutzer jedoch nachvollziehbar sein.

Mittels eines zweiten computerimplementierten Verfahrens 200 werden optimale Parameter p* für eine zu kalibrierende Funktion $f_{p*\_i}(x)$ ermittelt. Für diese optimalen Parameter p* wird eine Abweichung zwischen dem trainierten Agenten $g_i(x)$ und der kalibrierten Funktion $f_{p*\_i}(x)$ minimal. Diese mathematische Minimierungsaufgabe wird hier auch als "Kalibrierung" bezeichnet und lässt sich durch nachfolgende Formel beschreiben.

$$p^* = \underset{p}{\arg\min} \; |g_i(x) - f_{p\_i}(x)| \;\; \forall x \in cycle$$

Durch diese Kalibrierung und ein Ersetzen der Funktion aus dem Satz der Funktionen $f_i(x)$ des Steuergerätes 30 durch den Agenten $g_i(x)$ wird das Verhalten der kalibrierten Funktion $f_{p*\_i}(x)$ für den Nutzer nachvollziehbar. Dies erlaubt eine Verwendung der kalibrierten Funktion $f_{p*\_i}(x)$ in sicherheits- und zulassungskritischen Anwendungsbereichen wie dem ersten Beispiel des Dieselmotors.

Die optimalen Parameter p* können dabei über eine beliebige mathematische Norm ermittelt werden. Die mathematische Norm umfasst mathematische Rechenvorschriften, anhand derer eine Abweichung zwischen dem Ausgang einer zu kalibrierenden Funktion $f_{p\_i}(x)$ für unterschiedliche Kalibrierparameter $p_{i\_n}$ und dem Ausgang des Agenten $g_i(x)$ bemessen wird.

Beispielsweise kann diese Abweichung mittels einer Betragsnorm $|f_{p\_i}(x)-g(x)|$ ermittelt werden. Diese Betragsnorm ist eine absolute Abweichung zwischen den Ausgängen der zu kalibrierenden Funktion $f_{p\_i}(x)$ und dem Agenten $g_i(x)$. In einem anderen Aspekt wird eine quadratische Abweichung $(f_{p\_i}(x)-g(x))^2$ zur Berechnung der Abweichung verwendet. Diese quadratische Abweichung berücksichtigt größere Abweichungen beispielsweise stärker als kleinere Abweichungen.

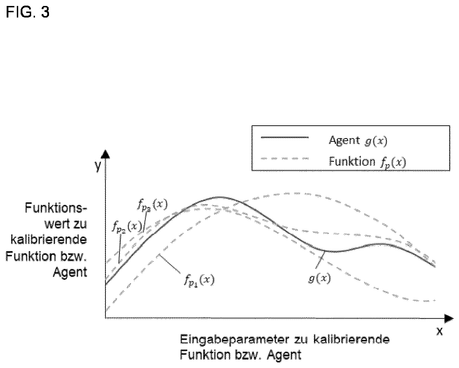

Fig. 3 zeigt ein Liniendiagramm, welches einen exemplarischen Verlauf einer Vielzahl von zu kalibrierenden Funktionen $f_{p\_i}(x)$ für unterschiedliche Kalibrierparameter $p_{i\_n}$ und einen Verlauf des trainierten Agenten $g_i(x)$ für eine der Funktionen aus der Vielzahl der Funktionen $f_i(x)$ des Steuergeräts 30 darstellt.

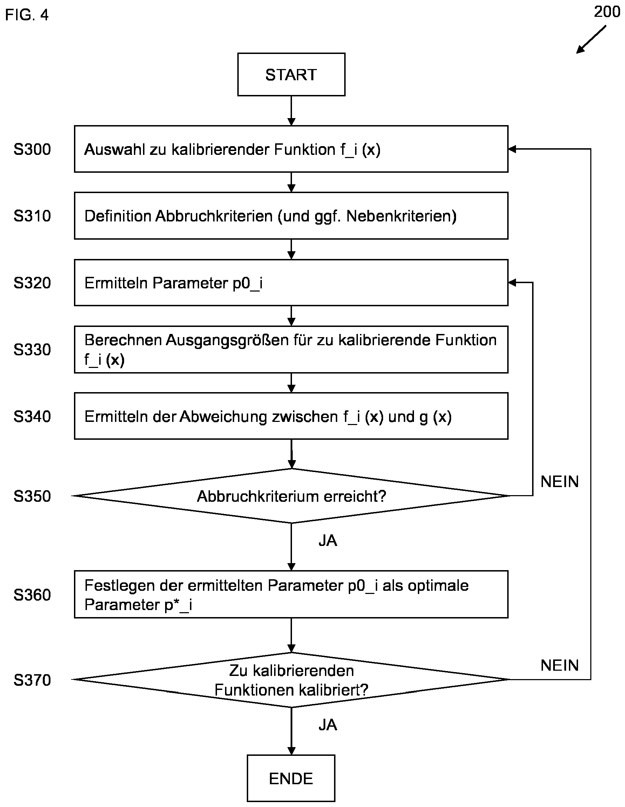

Fig. 4 zeigt ein Flussdiagramm des zweiten computerimplementierten Verfahrens 200 zur Ermittlung der Kalibrierparameter $p_{i\_n}$ der zu kalibrierenden Funktion $f_{p\_i}(x)$. Aus dem ersten Verfahren 100 sind der trainierte Agent $g_i(x)$ und die ursprünglichen Funktionen $f_i(x)$ des Steuergeräts 30 bekannt. Eine Variable $i$ wird hier zur Identifikation der zu kalibrierenden Funktion verwendet. Soll beispielsweise eine erste Funktion $f_1(x)$ kalibriert werden, wird die erste zu kalibrierende Funktion als $f_{p\_1}(x)$ bezeichnet. Im Falle der ersten zu kalibrierenden Funktion $f_{p\_1}(x)$ wird der Agent $g_i(x)$ mit $g_1(x)$ bezeichnet. Die Kalibrierparameter $p_{i\_n}$ der ersten zu kalibrierenden Funktion $f_{p\_1}(x)$ werden mit $p_{1\_n}$ bezeichnet. Eine Variable n bezeichnet hierbei eine Anzahl von Iterationen bis zum Erreichen eines Abbruchkriteriums.

In Schritt S300 wird zunächst die zu kalibrierenden Funktion $f_{p\_i}(x)$ aus dem Satz der Funktionen $f_i(x)$ gewählt. Ähnlich dem Schritt S105 kann die Auswahl der zu kalibrierenden Funktion $f_{p\_i}(x)$ beispielsweise durch einen Nutzer mittels Bedienoberfläche erfolgen. Für diese zu kalibrierende Funktion $f_{p\_i}(x)$ wird in Schritt S310 ein Abbruchkriterium definiert. Dieses Abbruchkriterium umfasst beispielsweise eine bestimmte durchschnittliche Abweichung oder ein bestimmtes Gütekriterium der zu kalibrierenden Funktion $f_{p\_i}(x)$ wie beispielsweise ein Unterschreiten vorbestimmter Emissionswerte. Zudem können in Schritt S310 zusätzliche Nebenkriterien für beliebige Kalibrierparameter $p_{i\_n}$ der zu kalibrierenden Funktion $f_{p\_i}(x)$ wie beispielsweise Wertebereiche von Parametern und Abhängigkeiten unter diesen Parametern wie etwa der maximalen Steigung eines Kennfeldes ausgewählt werden.

In Schritt S320 werden die Kalibrierparameter $p_{i\_n}$ für die zu kalibrierende Funktion $f_{p\_i}(x)$ ermittelt. Diese Kalibierparameter $p_{i\_n}$ können zufällig erzeugt oder vorab anhand der Lastzyklen 20 und/oder der Umgebungsbedingungen 25a ermittelt werden. In Schritt S330 werden für diese Kalibierparameter $p_{i\_n}$ Ausgangsgrößen für die zu kalibrierende Funktion $f_{p\_i}(x)$ ermittelt.

In Schritt S340 wird eine Abweichung zwischen den Ausgangsgrößen der zu kalibrierenden Funktion $f_{p\_i}(x)$ und dem Agenten $g_i(x)$ ermittelt. In Schritt S350 wird überprüft, ob diese Abweichung größer als das Abbruchkriterium oder kleiner als das Abbruchkriterium ist. Sofern die Abweichung größer als das Abbruchkriterium ist, werden die Kalibierparameter $p_{i\_n}$ in Schritt S360 für die zu kalibrierende Funktion $f_{p\_i}(x)$ als optimale Parameter $p_i^*$ gespeichert. Für diese optimalen Parameter $p_i^*$ liegt die Abweichung über dem Abbruchkriterium. Sofern in Schritt S350 die Abweichung kleiner als das Abbruchkriterium ist, wird in Schritt S370 überprüft, ob eine weitere Funktion aus dem Satz der Funktionen $f_i(x)$ kalibriert werden soll. Sofern eine weitere Funktion kalibriert werden soll, wird diese Funktion als zu kalibrierende Funktion $f_{p\_i}(x)$ verwendet und Schritt S300 bis Schritt S370 werden erneut durchlaufen.

Sofern die Abweichung in Schritt S350 kleiner als das Abbruchkriterium ist, werden Schritt S320 bis Schritt S350 erneut durchlaufen. Üblicherweise umfasst die Kalibrierung der zu kalibrierenden Funktion $f_{p\_i}(x)$ eine Vielzahl von Iterationen von Schritt S320 bis Schritt S350.

Weitere Anwendungsbeispiele

Das Verfahren 100 kann auch in weiteren technischen Gebieten Anwendung finden. In einem zweiten Beispiel ist die Regelungseinheit 35 eine Drehmomentenregeleinheit für eine Drehmomentenverteilung in einem Hybridantrieb. In diesem zweiten Beispiel bildet die Regelungseinheit 35 ein Verhalten der Drehmomentenregeleinheit für die Drehmomentenverteilung in dem Hybridantrieb ab. Der Hybridantrieb eines Hybridfahrzeuges umfasst üblicherweise einen Ottomotor sowie einen Elektromotor. Der Ottomotor weist im Wesentlichen die im ersten Beispiel beschriebenen Aktuatorzustände 45 auf. Der Elektromotor weist von den Aktuatorzuständen 45 des Ottomotors abweichende Aktuatorzustände 45 auf. In diesem zweiten Beispiel sind Ottomotor-Aktuatorzustände 45a des Ottomotors in einem Ottomotor-Aktuatormodell 40a und Elektromotor-Aktuatorzustände 45b des Elektromotors in einem Elektromotor-Aktuatormodell 40b in der Regelungseinheit 35 gespeichert.

Die Regelungseinheit 35 erhält in dem zweiten Beispiel ebenfalls den Lastzyklus 20 und die Umgebungsbedingungen 25a. Der Lastzyklus 20 umfasst in dem zweiten Beispiel Informationen wie ein gewünschtes Drehmoment an Rädern des Hybridfahrzeuges welches mit dem Hybridantrieb ausgestattet ist. Die Umgebungsbedingungen 25a umfassen in beispielsweise mindestens eine Umgebungstemperatur, einen Reifendruck, einen Reifendurchmesser, eine Fahrgeschwindigkeit, einen Fahrbahnzustand oder einen Fahrmodus des Fahrzeuges. 30 Aus dem Lastzyklus 20 und den Umgebungsbedingungen 25a wird mit Hilfe des Steuergeräts eine Vielzahl von Steuersignalen 25b für das Ottomotor-Aktuatormodell 40a und für das Elektromotor-Aktuatormodell 40b ermittelt.

Die in das Ottomotor-Aktuatormodell 40a und die in das Elektromotor-Aktuatormodell 40b eingegebenen Steuersignale 25b werden zu Ottomotor-Aktuatorzustände 45a und Elektromotor-Aktuatorzuständen 45b verarbeitet und an die virtuelle Einheit 50 ausgegeben. In dem zweiten Beispiel umfassen die Aktuatorzustände 45a, 45b beispielsweise eine Ventilstellung von Ein- oder Auslassventilen oder eine Kolbenstellung eines Kolbens im Ottomotor oder eine Nennstromaufnahme sowie eine Drehmomentabgabe des Elektromotors.

Die ausgegebenen Aktuatorzustände 45a, 45b werden in der virtuellen Einheit 50 zu Ergebnisparametern 25c verarbeitet. Das Verarbeiten der Aktuatorzustände 45a, 45b in der virtuelle Einheit 50 umfasst in dem ersten Beispiel eine Simulation des Verbrennungsmotors unter Verwendung der Verbrennungsmotor-Aktuatorzustände 45a sowie eine Simulation des Elektromotors unter Verwendung der Elektromotor-Aktuatorzustände 45b. Die Ergebnisparameter 25c werden an zumindest die Regelungseinheit 35 oder die Vorverarbeitungseinheit 55 ausgegeben.

In der Vorverarbeitungseinheit 55 werden die ausgegebenen Ergebnisparameter 25c mit Zielwerten 25d verglichen. Aus diesem Vergleich der ausgegebenen Ergebnisparameter 25c mit den Zielwerten 25d wird eine erste Beobachtung 60 und eine erste Belohnung 65 ermittelt. Die Zielwerte 25d umfassen in dem ersten Beispiel mindestens einen Verbrauch des Verbrennungsmediums und einen Verbrauch der Prozessluft, eine Temperatur eines Abgases, eine Zusammensetzung des Abgases, eine Dichte des Abgases, einen $CO_2$-Ausstoß, ein Drehmoment des Ottomotors, eine Leistungsaufnahme des Elektromotors oder ein Drehmoment des Elektromotors. Auf Grundlage der Zielwerte 25d werden eine erste Beobachtung 60 und eine erste Belohnung 65 ermittelt und an das Lernmodul 70 übermittelt. Unter Berücksichtigung der ersten Beobachtung 60 und der ersten Belohnung 65 wird der Agent $g_i(x)$ trainiert. Unter Anwendung des Lernmoduls 70 werden erste Aktionen 85 erzeugt und an das Trainings-Aktuatormodell 90 übermittelt. In dem Trainings-Aktuatormodell 90 werden auf Grundlage der ersten Aktionen 85 angepasste Aktuatorzustände 95 ermittelt. Diese angepassten Aktuatorzustände 95 werden an die virtuelle Einheit 50 übermittelt.

In der virtuellen Einheit 50 werden die angepassten Aktuatorzustände 95 zu Ergebnisparametern 25c verarbeitet. Diese verarbeiteten Ergebnisparameter 25c werden iterativ mit den Zielwerten 25d in der Vorverarbeitungseinheit 55 verglichen. Auf Grundlage dieses Vergleichs wird eine zweite Beobachtung 60 und eine zweite Belohnung 65 ermittelt und an das Lernmodul 70 übermittelt. In dem Lernmodul 70 wird unter Berücksichtigung der zweiten Beobachtung 60 und der zweiten Belohnung 65 der Agent $g_i(x)$ erneut trainiert.

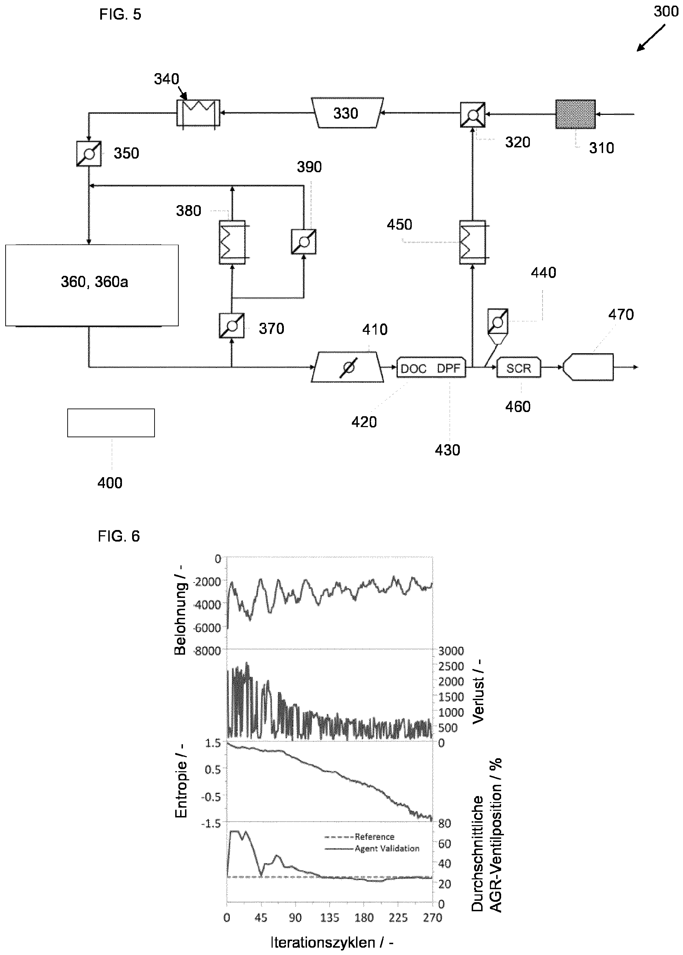

Fig. 5 zeigt, in einem dritten Beispiel, eine Übersicht von Komponenten einer Emissionssteuerung 300 in dieselmotorgetriebenen Kraftfahrzeugen. In dem dritten Beispiel kann das Verfahren 100 für eine Optimierung einer Steuereinheit für eine Abgasrückführung 400 (auch als "AGR-Steuereinheit" bezeichnet) in Dieselmotoren 360 von Fahrzeugen verwendet werden. Die Abgasrückführung bezeichnet eine Rückführung von Abgasen des Dieselmotors 360 in dessen Brennkammer 360a zur erneuten Verbrennung. Durch diese erneute Verbrennung der Abgase in der Brennkammer 360a können Stickstoffoxid-Emissionen ($NO_x$) des Dieselmotors 360 reduziert werden. Allerdings entstehen durch diese erneute Verbrennung der Abgase zusätzliche Rußemissionen, welche beispielsweise einen leistungsreduzierenden oder schädigenden Effekt auf nachgelagerte Systemkomponenten der dieselmotorgetriebenen Fahrzeuge, wie beispielsweise einen Ruß- bzw. Dieselpartikelfilter 430, haben können. Bei der Optimierung der AGR-Steuereinheit 400 muss üblicherweise zwischen einer Optimierung hinsichtlich der Stickstoffoxid-Emissionen ($NO_x$) und der Rußemissionen abgewogen werden.

Im dem dritten Beispiel wird von einem Mittelklassefahrzeug mit einem Leergewicht von 1.500 kg und einem Hinterradantrieb ausgegangen, wobei die Erfindung nicht auf diesem Beispiel nicht limitiert ist. Das beispielhafte Mittelklassefahrzeug verfügt über ein Sechsganghandschaltgetriebe sowie einen Vierzylinderdieselmotor 360 mit Direkteinspritzung und einem Hubraum von 2.0-Litern. Das dieselmotorgetriebene Mittelklassefahrzeug umfasst einen Luftfilter 310 über den Prozessluft aufgenommen wird. Diese Prozessluft wird über ein 3-Wege Ventil 320 einem Kompressor 330 zugeführt. Diese zugeführte Prozessluft wird in dem Kompressor 330 verdichtet und über einen Ladeluftkühler 340 abgekühlt. Über eine Drosselklappe 350 wird die abgekühlte Prozessluft dem Dieselmotor 360 zugeführt. In der Brennkammer 360a des Dieselmotors 360 wird die Prozessluft mit Dieseltreibstoff (nicht dargestellt) verbrannt. Die verbrannte Prozessluft wird aus der Brennkammer des Dieselmotors abgeführt und anteilig über ein (Hochdruck-) Abgasrückführventil 370 (auch als "(Hochdruck-)AGR-Ventil" bezeichnet) und einen (Hochdruck-) Abgasrückführkühler 380 (auch als "(Hochdruck-)AGR-Kühler" bezeichnet) bzw. einen (Hochdruck-) Abgasrückführ-Bypass 390 (auch als "(Hochdruck-)AGR-Bypass" bezeichnet) wieder der Brennkammer 360a des Dieselmotors 360 zugeführt.

In dem gezeigten Vierzylinderdieselmotor 360 nimmt bei steigender Motorlast die Emission von Rußpartikeln zu. Die Abgase des Dieselmotors weisen daher bei steigender Motorlast einen größeren Mengen- bzw. Volumenanteil an Rußpartikeln auf. Um die nachgelagerten Systemkomponenten des dieselmotorgetriebenen Fahrzeuges vor leistungsreduzierenden oder schädigenden Effekten zu schützen, muss diese Rückführung des Abgases in die Brennkammer des Motors reduziert werden. Diese Reduktion der Rückführung wird über die AGR-Steuereinheit 400 gesteuert, welche eine Ventilstellung AGR-Ventils 370 steuert. Beispielsweise steuert die AGR-Steuereinheit 400 das AGR-Ventil 370 so, dass weniger Abgase in die Brennkammer 360a des Dieselmotors 360 gelangen und ein größerer Anteil dieser Abgase direkt einer nachgelagerten Turbine 410 zugeführt wird. Diese Abgase gelangen von der Turbine 410 über Dieseloxidationskatalysatoren 420, Ruß- bzw. Dieselpartikelfilter 430, einen Urea-Dosierer 440, katalytische Reduktionskatalysatoren 460 und einen Schalldämpfer 470 wieder in die Umgebungsluft. Ferner kann ein Anteil dieser Abgase über einen (Niederdruck-) Abgasrückführkühler 450 (auch als "(Niederdruck-)AGR-Kühler" bezeichnet) an das 3-Wege-Ventil 320 zurückgeführt werden.

Um diese AGR-Steuereinheit 400 optimieren zu können, wird in Schritt S 105 die zu trainierende Funktion aus dem Set der Funktionen $f_i(x)$ ausgewählt. In diesem dritten Beispiel handelt es sich bei der zu trainierenden Funktion um die Steuerfunktion der AGR-Steuereinheit 400 zur Steuerung des AGR-Ventils 370. In Schritt S106 beginnt das Training der zu trainierenden Funktion.

Schritt S107 werden der Lastzyklus 20 und die Umgebungsbedingungen 25a ausgewählt und in das Steuergerät 30 eingegeben. Das Steuergerät 30 entspricht in diesem dritten Beispiel also einem Abbild der AGR-Steuereinheit 400 welche die zu optimierende Funktion umfasst. Zudem werden die Zielwerte 25d für den Dieselmotor erfasst. Der Lastzyklus 20 umfasst in diesem Beispiel eine Beschleunigungsphase des Kraftfahrzeuges. Die Zielwerte 25d umfassen beispielsweise eine zu erreichende Motordrehzahl und ein zugehöriges, zu erreichendes Drehmoment. In Schritt S108 beginnt die (Trainings-)Episode.

In Schritt S110 wird mit Hilfe dieser Sätze von Funktionen $f_i(x)$ aus dem Lastzyklus 20 und den Umgebungsbedingungen 25a die Vielzahl der Steuersignale 25b für das Steuergerät 30 ermittelt. Die Steuersignale 25b für die zu optimierende Steuerfunktion der AGR-Steuereinheit 400 umfassen beispielsweise eine Stellung des AGR-Ventils 370 oder eine Einstellgeschwindigkeit des AGR-Ventils 370. Diese Steuersignale 25b werden in Schritt S120 bis Schritt S140 zu Aktuatorzuständen 45 verarbeitet und in Schritt S140 bis Schritt S160 zur Ergebnisparametern 25c verarbeitet.

Die Ergebnisparameter 25c werden mit den Zielwerten 25d verglichen und es werden in Schritt S180 wird die Beobachtung 60 und die Belohnung 65 ermittelt. Im vorliegenden dritten Beispiel soll die AGR-Steuereinheit 400 unter Berücksichtigung der Stickstoffoxid-Emissionen ($NO_x$) und der Rußemissionen optimiert werden. Die Belohnung 65 wird daher in Abhängigkeit der von den Stickstoffoxid-Emissionen $m_{NOx}$, den Rußemissionen $m_{Ruß}$ und einer Abweichung $\Delta T$ zwischen einem zu erreichendem Motordrehmoment und einem tatsächlich erreichten Motordrehmoment ermittelt. Zusätzlich findet eine Gewichtung über die Gewichtungsfaktoren $w_{NOx}$, $w_{Ruß}$, $w_T$ statt. Eine Funktion zur Ermittlung der Belohnung 65 lautet folgendermaßen.

$$Belohnung = -w_{NOx} * m_{NOx} - w_{Ruß} * m_{Ruß} - w_T * \Delta T$$

Die ermittelte Belohnung 65 sowie die Beobachtung werden in Schritt S190 an das Lernmodul 70 ausgegeben. In Schritt S253 wird unter Berücksichtigung der ersten Beobachtung 60 und der Belohnung 65 der Agent $g_i(x)$ für die zu trainierende Funktion der AGR-Steuereinheit 400 unter Verwendung des bestärkenden Lernens 80 trainiert. In Schritt S220 bis Schritt S260 werden iterativ die Ergebnisparameter 25c bis zum Erreichen des Endwerts in Schritt S270 verglichen.

Fig. 6 zeigt einen exemplarischen Verlauf dieses iterativen Trainierens des Agenten $g_i(x)$ anhand des Wertes der Belohnung 65, einem Verlust, einer Entropie und einer durchschnittlichen Position des AGR-Ventils 370 über den Verlauf der Iterationszyklen.

Weitere mögliche Anwendungsfälle

Es sind eine Vielzahl von weiteren technischen Gebieten und Beispielen zur Nutzung des Verfahren 100 und der Vorrichtung 200 ersichtlich. In der Antriebstechnik kann das Verfahren 100 beispielsweise zur Optimierung eines Verbrennungsmotors verwendet werden. Hier kann die beispielsweise eine Steuerung, eine Ladedruckregelung, eine Drosselklappenregelung (Ottomotor), eine Urea-Dosierung (Dieselmotor), eine Leerlaufregelung oder eine Kalibrierungen für verschiedene Modi (z.B. Sport, Eco) oder Bedingungen (z.B. Höhenfahrt, Kaltstart) optimiert werden. Ferner kann das Verfahren 100 in der Antriebstechnik auch für eine Optimierung eines Elektromotors verwendet werden.

Hier kann beispielsweise eine Drehzahlregelung oder eine Invertersteuerung verbessert werden. Ferner sind in der Antriebstechnik auch Optimierungen von Batteriemanagementsystemen, von Schaltstrategien für Automatikgetriebe oder von Advanced Driver Assistance Systems (ADAS) wie beispielsweise eine Längsregelung (Trajektorienplanung; Drehmomentenregelung am Antriebsstrang), eine Querregelung (Trajektorienplanung; Drehmomentenregelung am Lenkrad) oder eine Vertikalregelung (Adaptive Feder-/Dämpfersysteme) möglich. Ferner kann das Verfahren auch zur Optimierung einer Verkehrssteuerung (dynamische, verkehrsadaptive Ampelsteuerung; dynamische Steuerung von Straßenschildern wie z.B. Geschwindigkeitslimits verwendet werden.

Zudem kann das Verfahren 100 auch in Medizintechnik, in einem Management-Systeme für Stromnetze, in einer Steuerung von automatisierten Flugzeugen/Schiffen/Drohnen/Greifarmen/Produktionsstraßen/etc. sowie in einer Gebäudetechnik für beispielsweise eine Regelung von Heizung/Licht/Warmwasseraufbereitung/etc. zum Einsatz kommen.

Bezugszeichenliste

| 10 | System |
|---|---|
| 20 | Lastzyklus |
| 25a | Umgebungsbedingungen |
| 25b | Steuersignale |
| 25c | Ergebnisparameter |
| 25c' | zweite Ergebnisparameter |
| 25c" | dritte Ergebnisparameter |
| 25d | Zielwerte |
| 30 | Steuergerät |
| 35 | Regelungseinheit |
| 40 | Aktuatormodell |
| 45 | Aktuatorzustände |
| 50 | virtuelle Einheit |
| 55 | Vorverarbeitungseinheit |
| 60 | Beobachtung |
| 65 | Belohnung |
| 70 | Lernmodul |
| 80 | bestärkendes Lernen |
| 85 | erste Aktion |
| 85' | zweite Aktion |
| 90 | Trainings-Aktuatormodell |
| 95 | angepasste Aktuatorzustände |
| 95' | zweite angepasste Aktuatorzustände |
| 100 | erstes Verfahren |
| 200 | zweites Verfahren |
| 300 | exemplarische Emissionssteuerung in einem Dieselmotor |
| 310 | Luftfilter |
| 320 | 3-Wege-Ventil |
| 330 | Kompressor |
| 340 | Ladeluftkühler |
| 350 | Drosselklappe |
| 360 | Dieselmotor |
| 360a | Brennkammer |
| 370 | (Hochdruck) AGR-Ventil |

380     (Hochdruck) AGR-Kühler
390     (Hochdruck) AGR-Kühler Bypass
400     AGR-Steuereinheit
410     Turbine
420     Dieseloxidationskatalysatoren
430     Ruß- bzw. Dieselpartikelfilter
440     Urea-Dosierer
450     (Niederdruck) AGR-Kühler
460     katalytische Reduktionskatalysatoren
470     Schalldämpfer
$f_i(x)$    Funktion
$g_i(x)$    Agent

**Patentansprüche**

1.  Computerimplementiertes Verfahren (100) für eine Kalibrierung eines Satzes von Funktionen ($f_i(x)$) eines Steuergerätes (30), wobei das Verfahren (100) umfasst:

    Eingeben (S107) von mindestens einem Lastzyklus (20) und Umgebungsbedingungen (25a) in das Steuergerät (30);
    Ermitteln (S110) einer Vielzahl von Steuersignalen (25b) in dem Steuergerät (30) unter Verwendung des Satzes der Funktionen ($f_i(x)$);
    Eingeben (S120) der Vielzahl der Steuersignale (25b) in ein Aktuatormodell (40);
    Verarbeiten (S130) der Steuersignale (25b) in dem Aktuatormodell (40) und Ausgeben (S140) von Aktuatorzuständen (45);
    Verarbeiten (S150) der ausgegebenen Aktuatorzustände (45) in einer virtuellen Einheit (50) und Ausgeben (S160) von Ergebnisparametern (25c, 25c', 25c") und Vergleichen der ausgegebenen Ergebnisparameter (25c, 25c', 25c") mit Zielwerten (25d) in einer Vorverarbeitungseinheit (55);
    Ermitteln (S180) einer Beobachtung (60) und einer Belohnung (65) aus den ausgegebenen Ergebnisparametern (25c, 25c', 25c") in der Vorverarbeitungseinheit (55);
    Ermitteln (S230) von angepassten Aktuatorzuständen (95, 95') in einem Trainings-Aktuatormodell (90);
    Verarbeiten (S250) der angepassten Aktuatorzustände (95, 95') zu Ergebnisparametern (25c, 25c', 25c") in der virtuellen Einheit (50);
    Trainieren (S253) eines Agenten $g_i(x)$ einer Funktion $f_i(x)$ aus dem Satz der Funktionen $f_i(x)$ unter Berücksichtigung der Beobachtung (60) und der Belohnung (65) durch ein bestärkendes Lernen (80); und
    iteratives Vergleichen (S260) der verarbeiteten Ergebnisparameter (25c, 25c', 25c") mit den Zielwerten (25d), bis zum Erreichen eines Endwerts.

2.  Computerimplementiertes Verfahren gemäß Anspruch 1, ferner umfassend
    ein Wiederholen des Trainierens (S253) des Agenten $g_i(x)$ mit mindestens einer weiteren Funktion $f_i(x)$ aus dem Satz der Funktionen $f_i(x)$.

3.  Computerimplementiertes Verfahren (100) gemäß Anspruch 2, wobei:
    das Aktuatormodell (40) die Aktuatorzustände (45) von zumindest eines von einem mechanischen Aktuator, einem elektrischen Aktuator, einem elektromagnetischen oder einem hydraulischen Aktuator umfasst.

4.  Computerimplementiertes Verfahren (100) gemäß Anspruch 1 bis 3, wobei:
    die Aktuatorzustände (45) mindestens eines von einer Ventilstellung, einer Durchflussmenge, einem Druck, einem Drehwinkel oder einem Hub umfassen.

5.  Computerimplementiertes Verfahren (100) gemäß Anspruch 1, wobei das Verfahren (100) ferner umfasst:
    Berechnen (S110) der Steuersignale (25b) in einem Steuergerät (30) unter Verwendung mindestens eines von einem Lastzyklus (20) und einer Vielzahl von Umgebungsbedingungen (25a).

6.  Computerimplementiertes Verfahren (100) gemäß Anspruch 5, wobei:

    der Lastzyklus (20) ein Motordrehzahl-Motorleistung-Kurve umfasst; und

die Umgebungsbedingungen (25a) mindestens eines von einer Temperatur, einem Druck, einer Dichte, einer Zusammensetzung einer Prozessluft und mindestens eines von einer Temperatur, einem Energiegehalt, einer Dichte, einer Zusammensetzung oder einem Heizwert eines Verbrennungsmediums umfasst.

7. Computerimplementiertes Verfahren (100) gemäß einem der Ansprüche 1 bis 6, wobei:
   die Ergebnisparameter (25c, 25c', 25c") mindestens eines von einem Verbrauch eines Verbrennungsmediums und einer Prozessluft, einer Temperatur eines Abgases, einer Zusammensetzung des Abgases, einer Dichte des Abgases, einem $CO_2$-Ausstoß oder einem Drehmoment umfassen.

8. Computerimplementiertes Verfahren (200) zur Ermittlung optimaler Parameter ( $p_i^*$ ) für eine zu kalibrierende Funktion ($f_{p\_i}(x)$), wobei das Verfahren (200) umfasst:

   Ermitteln (S320) von Kalibierparametern ($p_{i\_n}$) für die zu kalibrierende Funktion ($f_{p\_i}(x)$);
   Berechnen (S330) von Ausgangsgrößen der zu kalibrierenden Funktion ($f_{p\_i}(x)$) unter Verwendung der ermittelten Kalibierparameter ($p_{i\_n}$);
   Ermitteln (S340) einer Abweichung zwischen den Ausgangsgrößen der kalibrierenden Funktion ($f_{p\_i}(x)$) und einem Agenten ($g_i(x)$); und

   Speichern (S360) der Kalibierparameter ($p_{i\_n}$) als optimale Parameter ( $p_i^*$ ).

9. System (10) für eine automatisierte Kalibrierung eines Satzes von Funktionen ($f_i(x)$) eines Steuergerätes (30), wobei das System (10) umfasst:

   einen Prozessor zum Ermitteln zumindest eines von Steuersignalen (25b), Ergebnisparametern (25c, 25c', 25c"), Zielwerten (25d), Aktuatorzuständen (45) oder angepassten Aktuatorzuständen (95, 95') zum Steuern einer virtuellen Einheit (50); und
   einen Speicher zum Speichern zumindest eines von einer Regelungseinheit (35), einem Aktuatormodell (40), einer virtuellen Einheit (50), einer Vorverarbeitungseinheit (55) und einem Trainings-Aktuatormodell (90).

10. Verwendung eines computerimplementierten Verfahrens (100) gemäß einem der Ansprüche 1 bis 6 für eine Kalibrierung einer oder mehrerer Funktionen ($f_i(x)$) eines Steuergeräts (30), wobei das Steuergerät (30) umfasst einen Verbrennungs- oder Elektromotor, eine Ladedruckregelung, eine Drosselklappenregelung (Ottomotor), eine Urea-Dosierung (Dieselmotor), eine Leerlaufregelung eine Drehzahlregelung eine Invertersteuerung, ein Batteriemanagementsystemen, eine Advanced-Driver-Assistance- System (ADAS) eine Längsregelung (Trajektorienplanung; Drehmomentenregelung am Antriebsstrang), eine Querregelung (Trajektorienplanung; Drehmomentenregelung am Lenkrad) oder eine Vertikalregelung (Adaptive Feder-/Dämpfersysteme, ein medizinisches Gerat, Management-Systeme für Stromnetze, ein Steuerungsgerät von automatisierten Flugzeugen, Schiffen, Drohnen, Greifarmen, Produktionsstraßen sowie Gebäudetechnik.

FIG. 1

10

20, 25a

20, 25a

30

75

25b

40

45

35

55

60
65

70

80

85, 85'

25c,
25c',
25c"

50

90

95,
95'

20, 25a

FIG. 2A

100

```
                        ┌─────────────┐
                        │    START    │
                        └──────┬──────┘
                               │
         ┌─────────────────────▼─────────────────────┐
S105     │ Auswahl zu trainierende Funktion aus Satz von │
         │ Funktionen                                 │
         └─────────────────────┬─────────────────────┘
                               │
         ┌─────────────────────▼─────────────────────┐
S106     │ Start Training einer zu trainierenden Funktion │◄──── A
         └─────────────────────┬─────────────────────┘
                               │
         ┌─────────────────────▼─────────────────────┐
S107     │ Auswahl und Eingeben Lastzyklus 20 und     │
         │ Umgebungsbedingungen 25a in Steuergerät 30 │
         └─────────────────────┬─────────────────────┘
                               │
         ┌─────────────────────▼─────────────────────┐
S108     │ Start einer (Trainings-)episode            │◄──── B
         └─────────────────────┬─────────────────────┘
                               │
         ┌─────────────────────▼─────────────────────┐
S110     │ Ermitteln Steuersignale 25b aus Lastzyklus 20 und │◄──── C
         │ Umgebungsbedingungen 25a                   │
         └─────────────────────┬─────────────────────┘
                               │
         ┌─────────────────────▼─────────────────────┐
S120     │ Eingeben Steuersignale 25b                 │
         │ in Aktuatormodell 40                       │
         └─────────────────────┬─────────────────────┘
                               │
         ┌─────────────────────▼─────────────────────┐
S130     │ Verarbeiten Steuersignale 25b zu den Aktuatorzuständen │
         │ 45 in dem Aktuatormodell 40                │
         └─────────────────────┬─────────────────────┘
                               │
         ┌─────────────────────▼─────────────────────┐
S140     │ Ausgeben Aktuatorzustände 45               │
         └─────────────────────┬─────────────────────┘
                               │
         ┌─────────────────────▼─────────────────────┐
S150     │ Verarbeiten ausgegebener Aktuatorzustände 45 bzw. │
         │ angepasster Aktuatorzustände 95 in virtueller Einheit 50 │
         └─────────────────────┬─────────────────────┘
                               │
         ┌─────────────────────▼─────────────────────┐
S160     │ Ausgeben Ergebnisparameter 25c, 25c'       │
         └─────────────────────┬─────────────────────┘
                               │
         ┌─────────────────────▼─────────────────────┐
S180     │ Ermitteln Beobachtung 60 und Belohnung 65  │
         └─────────────────────┬─────────────────────┘
                               │
         ┌─────────────────────▼─────────────────────┐
S190     │ Ausgeben Beobachtung 60 und Belohnung 65   │
         └─────────────────────┬─────────────────────┘
                               │
                               ▼
                               ● X
```

FIG. 2B

100

X

S210 — Erzeugen Aktionen 85, 85'

S220 — Eingeben Aktionen 85, 85' in Trainings-Aktuatormodell 90

S230 — Ermitteln angepasster Aktuatorzustände 95, 95' in Trainings-Aktuatormodell 90

S240 — Übermitteln angepasster Aktuatorzustände 95, 95'

S250 — Verarbeiten Aktuatorzustände 95, 95' in virtueller Einheit 50 zu Ergebnisparametern 25c, 25c', 25c"

S251 — Episode vorüber?    C ●    NEIN

S252 — Übergabe Erfahrungen an (externes) Lernmodul

S253 — Trainieren eines Agent $g_i$ *(x)* für die zu trainierenden Funktionen $f_i(x)$ durch bestärkendes Lernen 80

S260 — Vergleichen Ergebnisparameter 25c, 25c', 25c"mit Zielwerten 25d

S270 — Endwert erreicht?    B ●    NEIN

JA

S280 — Gewählte Funktion(en) abgeschlossen?    A ●    NEIN

JA

ENDE

FIG. 3

FIG. 4

200

FIG. 5

FIG. 6

Europäisches
Patentamt

European
Patent Office

Office européen
des brevets

# EUROPÄISCHER RECHERCHENBERICHT

Nummer der Anmeldung

EP 23 15 7594

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2021/029802 A1 (KAABERG JOHARD LEONARD [SE]) 18. Februar 2021 (2021-02-18) * Zusammenfassung; Abbildungen 1-4 * * Seite 3, Zeile 80 – Seite 17, Zeile 575 * ----- | 1-10 | INV. G05B13/04 G05B13/02 G06N20/00 G05B1/02 |
| A | US 2020/063676 A1 (NEEMA KARTAVYA [US] ET AL) 27. Februar 2020 (2020-02-27) * Zusammenfassung; Abbildungen 1-4 * * Absatz [0028] – Absatz [0047] * ----- | 1-10 | |
| A | DE 10 2019 106234 B3 (PORSCHE AG [DE]) 27. August 2020 (2020-08-27) * Zusammenfassung; Abbildung 1 * * Absatz [0021] – Absatz [0035] * ----- | 1-10 | |
| A | DE 10 2019 125974 A1 (PORSCHE AG [DE]) 1. April 2021 (2021-04-01) * Zusammenfassung; Abbildung 1 * * Absatz [0033] – Absatz [0058] * ----- | 1-10 | RECHERCHIERTE SACHGEBIETE (IPC) |
| A | Novak Markus ET AL: "Machine Learning based Air Path Control for Diesel Engines", Master's Thesis, 1. April 2021 (2021-04-01), XP093031577, Gefunden im Internet: URL:https://diglib.tugraz.at/download.php?id=6144a0b6df7a7&location=browse [gefunden am 2023-03-14] * das ganze Dokument * ----- | 1-10 | G05B G06N |

-/--

Der vorliegende Recherchenbericht wurde für alle Patentansprüche erstellt

| Recherchenort | Abschlußdatum der Recherche | Prüfer |
|---|---|---|
| München | 29. Juni 2023 | Martin Bueno, Teresa |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**Europäisches Patentamt**
**European Patent Office**
**Office européen des brevets**

# EUROPÄISCHER RECHERCHENBERICHT

**Nummer der Anmeldung**

EP 23 15 7594

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | ALIRAMEZANI MASOUD ET AL: "Modeling, diagnostics, optimization, and control of internal combustion engines via modern machine learning techniques: A review and future directions", PROGRESS IN ENERGY AND COMBUSTION SCIENCE, ELSEVIER SCIENCE PUBLISHERS, AMSTERDAM, NL, Bd. 88, 23. Oktober 2021 (2021-10-23), XP086885892, ISSN: 0360-1285, DOI: 10.1016/J.PECS.2021.100967 [gefunden am 2021-10-23] * das ganze Dokument * ----- | 1-10 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 29. Juni 2023 | Martin Bueno, Teresa |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 7594

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2023

| Im Recherchenbericht angeführtes Patentdokument | Datum der Veröffentlichung | Mitglied(er) der Patentfamilie | Datum der Veröffentlichung |
|---|---|---|---|
| WO 2021029802 A1 | 18-02-2021 | CN 114556374 A | 27-05-2022 |
| | | DE 112020003841 T5 | 19-05-2022 |
| | | GB 2603064 A | 27-07-2022 |
| | | JP 2022544474 A | 19-10-2022 |
| | | SE 1950924 A1 | 14-02-2021 |
| | | US 2022326664 A1 | 13-10-2022 |
| | | WO 2021029802 A1 | 18-02-2021 |
| US 2020063676 A1 | 27-02-2020 | KEINE | |
| DE 102019106234 B3 | 27-08-2020 | DE 102019106234 B3 | 27-08-2020 |
| | | DE 102020106880 A1 | 17-09-2020 |
| DE 102019125974 A1 | 01-04-2021 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 11027743 B1, Dutordoir
- EP 2513727 A1, Baumanns
- DE 10020448 B4, Bargende
- EP 2791827 A2, Wallner
- WO 2021105313 A1, Picheny
- DE 102019126244 A1
- US 11002202 B2, Narang

**In der Beschreibung aufgeführte Nicht-Patentliteratur**

- **NOVAK M.** Machine Learning based Air Path Control for Diesel Engines. *Masterarbeit,* April 2021
- **GARG P. ; SILVAS E. ; WILLEMS F.** Potential of Machine Learning Methods for Robust Performance and Efficient Engine Control Development. *IFAC PapersOnLine,* 2021, 189-195